# EUROPÄISCHE PATENTSCHRIFT

(11) **EP 2 368 417 B1**
(45) Veröffentlichungstag und Bekanntmachung des Hinweises auf die Patenterteilung: **19.09.2012**
(21) Anmeldenummer: 11157875.3
(22) Anmeldetag: 11.03.2011
(51) Int. Cl.: A01D 41/12, B60K 11/06, F01P 11/06, F01P 11/12

(54) **Erntemaschine mit einer Siebeinrichtung für Kühlluft**
Harvester with a filter device for cooling air
Moissonneuse dotée d'un dispositif de criblage pour l'air de refroidissement

(30) Priorität: 24.03.2010 DE 102010003194
(43) Veröffentlichungstag der Anmeldung: 28.09.2011
(73) Patentinhaber: DEERE & COMPANY, Moline, Illinois 61265-8098 (US)
(72) Erfinder: Hirsch, Walter, 66459 Kirkel (DE); Abbott, Jason T., Orion IL 61273 (US); Pfeiffer, Dohn W, 66440 Mimbach (DE); Peschel, Benjamin, 66497 Contwig (DE); Pohlmann, Norbert, 66482 Oberauerbach (DE); Klein, Oliver, 66740 Saarlouis (DE); Lauer, Fritz, 66894 Krähenberg (DE); Weichholdt, Dirk, 57200 Woelfling-lès-Sarreguemines (FR); Loutz, Eric, 57720 Erching-Guiderkirch (FR)
(74) Vertreter: Holst, Sönke

(56) Entgegenhaltungen:
- EP-A1- 1 972 765
- DE-A1- 10 225 090
- DE-A1- 19 742 846
- DE-A1- 19 857 681

## Beschreibung

Die Erfindung betrifft eine Emtemaschine nach dem Oberbegriff des Anspruchs 1.

### Stand der Technik

Die DE 102 25 090 A1 beschreibt eine Siebeinrichtung für die Kühlluft des Wärmetauschers. Das Sieb der Siebeinrichtung wird durch Bürsten von Verunreinigungen befreit, welche zusätzlich durch Unterdruck abgesaugt werden. Der Unterdruck wird mittels eines Gebläses erzeugt, dessen Ausgang die Luft ungenutzt nach unten auf das Feld abgibt.

In der als gattungsbildend angesehenen DE 198 57 681 A1 ist eine landwirtschaftliche Erntemaschine beschrieben, deren Verbrennungsmotor durch einen Ventilator mit Kühlluft versorgt wird. Die Kühlluft wird mittels eines Siebes gereinigt, von dem Verunreinigungen mittels eines Sauggebläses abgesaugt werden. Die Abluft des Sauggebläses umspült und kühlt ein Verteilergetriebe.

Bei landwirtschaftlichen Erntemaschinen fallen im Erntebetrieb relativ viele Partikel an, die sich an Teilen der Erntemaschine absetzen. Beispielsweise sei bei Mähdreschern auf Kaff und Strohteilchen verwiesen, die sich am Gehäuse des Strohhäckslers und den rückwärtig davon angeordneten Elementen, wie Wurfgebläsen oder Verteilergehäusen absetzen. Auch auf dem Gehäuse von axialen Dresch- und Trennvorrichtungen sammeln sich Erntegutpartikel an. Da derartige Partikel aus ästhetischen Gründen und wegen der Feuergefahr unerwünscht sind, wurde im Stand der Technik vorgeschlagen, sie mittels eines Luftstroms fortzublasen. Dieser Luftstrom wird bisher von einem einen Wärmetauscher durchströmenden, mittels eines Ventilators erzeugten Kühlluftstrom abgeleitet und dient zum Freiblasen der axialen Dresch- und Trennvorrichtung (EP 1 516 524 A1) oder eines Motorraums (EP 0 443 210 A1). Dabei wird ein Teil der Antriebsleistung des Ventilators zur Bereitstellung der Energie für das Freiblasen der Maschinenteile benötigt.

Außerdem wurde vorgeschlagen, einen mittels eines Kompressors erzeugten Luftstrom zum Freiblasen von Teilen einer Emtemaschine zu verwenden (EP 0 887 524 A2, EP 1 425 952 A1, EP 1 930 188 A1). Hier ist ein zusätzlicher Kompressor bereitzustellen, der einen beträchtlichen Aufwand erfordert.

### Aufgabe der Erfindung

Die der Erfindung zu Grunde liegende Aufgabe wird darin gesehen, eine Emtemaschine dahingehend zu verbessern, dass die Abluft des Sauggebläses der Absaugeinrichtung der Siebeinrichtung für sinnvolle Aufgaben genutzt wird.

### Lösung

Diese Aufgabe wird erfindungsgemäß durch die Lehre des Patentanspruches 1 gelöst.

Eine Emtemaschine ist mit einem Verbrennungsmotor und einem mit dem Verbrennungsmotor (und ggf. zusätzlichen Komponenten der Erntemaschine, wie einer Hydraulikanlage, einer Klimaanlage etc.) in fluidleitender Verbindung stehenden Wärmetauscher ausgestattet. Eine Siebeinrichtung ist dem Wärmetauscher in Strömungsrichtung der Kühlluft vorgelagert. Da sich beim Erntebetrieb an der Oberfläche der Siebeinrichtung Verunreinigungen ansammeln, werden sie mittels einer Absaugeinrichtung entfernt, wobei die Verunreinigungen zusätzlich mechanisch durch Bürsten oder dergleichen gelöst werden können. Die Absaugeinrichtung ist pneumatisch mit einem Eingang eines Sauggebläses verbunden. Um die Abluft der Absaugeinrichtung nicht ungenutzt auf das Feld zu blasen, ist der Ausgang des Sauggebläses mit einer Anordnung zum pneumatischen Abfördern von Verunreinigungen von wenigstens einem Bereich der Emtemaschine verbunden.

Die Energie der Abluft der Absaugeinrichtung wird dazu verwendet, Verunreinigungen von der Emtemaschine abzublasen, um das Aussehen der Erntemaschine zu verschönern und nachteilige (beispielsweise die Brandgefahr erhöhende oder Durchlässe versperrende) Verunreinigungen zu entfernen. Dazu ist der Ausgang des Sauggebläses mit einer Leitung verbunden, die einen auf den pneumatisch von Verunreinigungen zu befreienden Bereich der Emtemaschine gerichteten Auslass umfasst, der einen Strohhäcksler und Wurfgebläse pneumatisch von Verunreinigungen befreit. Der Auslass ist als Öffnung in einer seitlichen Wand realisiert, die sich zwischen einem Blech, das sich schräg nach hinten und unten erstreckt und mit einer sich daran anschließenden Rutsche verbunden ist, auf der Stroh in einem Schwadablagebetrieb nach unten auf den Feldboden gleiten kann, und einer oberen Abdeckung eines Strohhäckslers und von Wurfgebläsen befindet und rückwärtig des Strohhäckslers endet, sodass sich auf der oberen Abdeckung ansammelnde Emtegutreste pneumatisch abgefördert und nach hinten oder zur Seite hin abgegeben werden.

### Ausführungsbeispiel

Anhand der Abbildung wird ein Ausführungsbeispiel der Erfindung erläutert. Es zeigt:

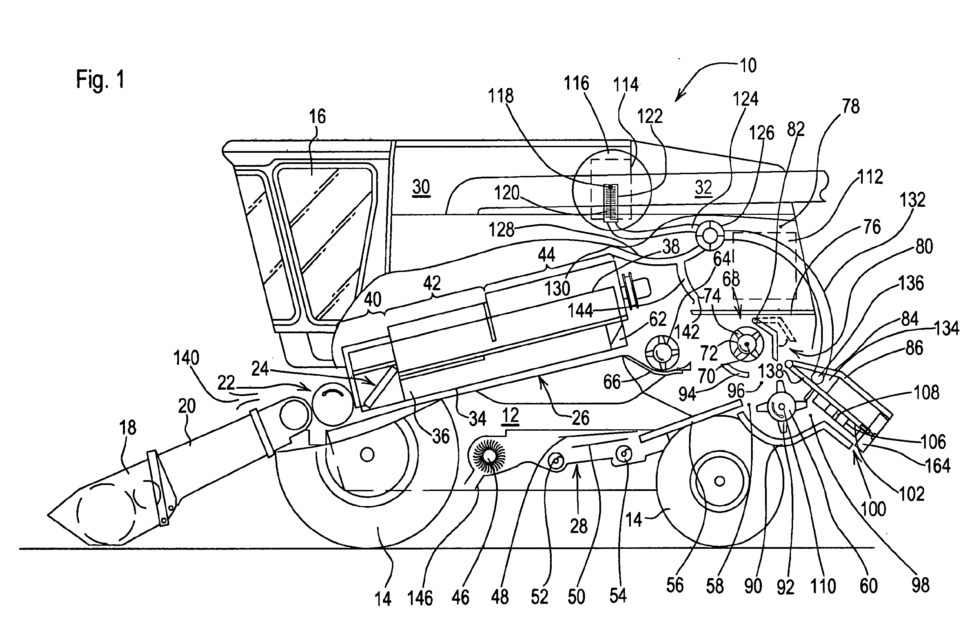

Fig. 1 eine teilgeschnittene seitliche Ansicht einer Erntemaschine mit einer Siebeinrichtung für Kühlluft, deren Absauggebläse Ausgangseitig mit verschiedenen Einrichtungen des Mähdreschers verbunden ist.

Die Figur 1 zeigt eine selbstfahrende landwirtschaftliche Emtemaschine 10 in Form eines Mähdreschers mit einem Fahrgestell 12 mit im Eingriff mit dem Boden befindlichen Rädern 14, die am Fahrgestell 12 befestigt sind und zum Vortrieb der Erntemaschine 10 dienen. Der Betrieb der Erntemaschine 10 wird von der Bedienerkabine 16 aus kontrolliert. Ein Schneidwerk 18 wird verwendet, um Korn enthaltendes Erntegut zu ernten und es einem Einzugsförderer 20 in Form eines Schrägförderers zuzuführen. Das geerntete Gut wird durch den Schrägförderer einer Leittrommel 22 zugeführt. Die Leittrommel 22 leitet das Erntegut durch einen Eingangübergangsabschnitt 24 zu einer axialen Emtegutbearbeitungseinrichtung 26. Im Folgenden beziehen sich Richtungsangaben, wie vom und hinten, auf die Vorwärtsrichtung der Erntemaschine 10, die in der Figur 1 nach links verläuft.

Die Emtegutbearbeitungseinrichtung 26 umfasst ein Rotorgehäuse 34 und einen darin angeordneten Rotor 36. Der Rotor 36 umfasst eine hohle Trommel 38, an der Gutbearbeitungselemente für einen Beschickungsabschnitt 40, einen Dreschabschnitt 42 und einen Trennabschnitt 44 befestigt sind. Anstelle einer axialen Erntegutbearbeitungseinheit 26 können auch eine tangentiale Dreschtrommel und eine ihr folgende axiale Trenneinrichtung oder ihr folgende Strohschüttler verwendet werden.

Korn und Spreu, die durch einen dem Dreschabschnitt 42 zugeordneten Dreschkorb und ein dem Trennabschnitt 44 zugeordneten Trennrost fallen, werden einem Reinigungssystem 28 mit einem Gebläse 46 und in eine Schwingbewegung versetzbaren Lamellensieben 48, 50 zugeführt. Das Reinigungssystem 28 entfernt die Spreu und führt das saubere Korn über einen Schneckenförderer 52 einem Elevator für sauberes Korn (nicht gezeigt) zu. Der Elevator für sauberes Korn legt das saubere Korn in einem Korntank 30 ab. Das saubere Korn im Korntank 30 kann durch einen Entladeschneckenförderer 32 auf einen Kornwagen, Anhänger oder Lastwagen entladen werden. Am rückwärtigen Ende des unteren Lamellensiebs 50 verbleibendes Erntegut wird mittels eines Schneckenförderers 54 und eines Überkehrförderers (nicht gezeigt) wieder der Erntegutbearbeitungseinrichtung 26 zugeführt. Die am rückwärtigen Ende des oberen Lamellensiebs 48 abgegebenen Erntegutreste, die im Wesentlichen aus Kaff (Spreu) und kleinen Strohteilchen bestehen, werden durch einen Schwingbodenförderer 56 nach hinten in einen Eingang 58 eines Strohhäckslers 60 gefördert.

Gedroschenes, den Trennabschnitt 44 verlassendes Stroh wird durch einen Ausgang 62 aus der Erntegutbearbeitungseinrichtung 26 ausgestoßen und einer Auswurftrommel 64 zugeführt. Die mit einem darunter angeordneten Boden 66 zusammenwirkende Auswurftrommel 64 wirft das Stroh nach hinten aus. Rückwärtig der Auswurftrommel 64 und etwa in vertikaler Höhe ihrer Drehachse befindet sich ein weiterer Förderer in Form eines oberschlächtig arbeitenden Trommelförderers 68. Der Trommelförderer 68 ist durch einen Antrieb um seine Achse 70 in Drehung versetzbar, in der er in der Figur 1 im Uhrzeigersinn dreht. Der Trommelförderer 68 umfasst einen rotationssymmetrischen Mantel 72 mit um seinen Umfang verteilten, starr daran angebrachten Mitnehmern 74. Unterhalb des Trommelförderers 68 ist eine Wanne 94 angeordnet.

Oberhalb der Auswurftrommel 64 und des Trommelförderers 68 ist eine sich horizontal und in Vorwärtsrichtung erstreckende obere Wand 76 angebracht, die einen darüber befindlichen Motorraum 78 nach unten abschließt. An der Wand 76 ist eine Klappe 80 an ihrem vorderen, dem Trommelförderer 68 benachbarten Ende um eine sich horizontal und quer zur Vorwärtsrichtung erstreckende Achse 82 zwischen einer Schwadablageposition und einer Häckselposition verschwenkbar angelenkt.

Unterhalb des unteren und rückwärtigen Endes der Klappe 80 schließt sich (bei in der Häckselstellung befindlicher Klappe 80) lückenlos ein mit dem Fahrgestell 12 fest verbundenes Blech 84 an, das sich schräg nach hinten und unten erstreckt und mit einer sich daran anschließenden Rutsche 86 verbunden ist, auf der das Stroh im Schwadablagebetrieb nach unten auf den Feldboden gleiten kann. Die Klappe 80 ist um die Achse 82 zwischen der Häckselposition, in der sie in der Figur 1 mit durchgezogenen Linien dargestellt ist, und einer Schwadablageposition verschwenkbar, in der die Klappe 80 in der Figur mit gestrichelten Linien dargestellt ist und sie sich oberhalb des Strohflusses nach hinten erstreckt.

Unterhalb des Blechs 84 befindet sich der Strohhäcksler 60, der sich aus einem Strohhäckslergehäuse 90 und einem darin angeordneten, um eine quer zur Vorwärtsrichtung und horizontal verlaufende Achse drehbaren Rotor 92 mit um den Umfang des Rotors 92 verteilten, pendelnd aufgehängten Häckselmessern 96 zusammensetzt. Stromab eines Ausganges 98 des Strohhäckslers 60 ist sind zwei seitlich nebeneinander unterhalb der Rutsche 86 angeordnete Wurfgebläse 100 vorgesehen, von denen in der Figur 1 nur ein einziges erkennbar ist. Die Wurfgebläse 100 umfassen eine Anzahl an Wurfpaddeln 102, die jeweils durch jeweils einen Hydraulikmotor 106 um ihre (sich etwa vertikal erstreckenden, jedoch leicht nach hinten und oben geneigten) Drehachsen 108 in Drehung versetzbar sind, und denen der Strohhäcksler 60 die Erntegutreste in axialer Richtung unter einem stumpfen Winkel gegenüber den Drehachsen der Wurfgebläse 100 von unten her zuführt.

In der Schwadablageposition der Klappe 80 fördert der Strohhäcksler 60 nur die Erntegutreste aus dem Reinigungssystem 28 zu den Wurfgebläsen 100, welche sie etwa über die Breite des Schneidwerks 18 auf dem Feldboden verteilen. Im Häckselbetrieb zerkleinert der Strohhäcksler 60 auch das Stroh auf dem Ausgang 62 der Erntegutbearbeitungseinrichtung 26, das durch die Auswurftrommel 64 und den Trommelförderer 68 gegen die Klappe 80 geworfen wird und dann nach unten in den Eingang 58 des Strohhäckslers 60 fällt.

Der Antrieb der angetriebenen Elemente der Erntemaschine 10 erfolgt durch einen im Motorraum 78 angeordneten Verbrennungsmotor 112. Ein Wärmetauscher 114 ist fluidleitend mit dem Verbrennungsmotor 112 verbunden und dient zur Kühlung seiner Kühlflüssigkeit. Weitere Wärmetauscher (nicht gezeigt) können zur Kühlung von Hydraulikfluid und/oder turbogeladener Verbrennungsluft für den Verbrennungsmotor 112 und/oder für eine Klimaanlage der Bedienerkabine 16 vorgesehen sein. Die Kühlluft für den Wärmetauscher 114 wird mittels eines Ventilators (nicht gezeigt) durch eine Siebeinrichtung 116 hindurch angesaugt. Die Siebeinrichtung 116 umfasst ein flaches Sieb, das um eine horizontale Achse 118 rotiert. Bürsten 120 lockern die sich an der Oberfläche des Siebs beim Erntebetrieb ansammelnden Verunreinigungen und eine Absaugeineinrichtung 122 mit einer der Sieboberfläche unmittelbar benachbarten Ansaugöffnung ist durch eine Leitung 124 mit einem Eingang eines angetriebenen Sauggebläses 126 verbunden. Das Sauggebläse 126 erzeugt in der Absaugeinrichtungen 122 einen Unterdruck, um die Verunreinigungen von der Sieboberfläche abzusaugen. Die Siebeinrichtung 116 kann beispielsweise gemäß der Offenbarung der DE 100 12 766 A1 ausgeführt sein.

Ein erster Ausgang des Sauggebläses 126 ist durch eine weitere Leitung 128 mit einem Auslass 130 verbunden, der die Luft auf das Gehäuse 34 der Erntegutbearbeitungseinrichtung 26 richtet, um sich dort ansammelnde Erntegutreste pneumatisch abzufördern. Ein zweiter Ausgang des Sauggebläses 126 ist durch eine Leitung 132 mit einem Auslass 136 verbunden, der als Öffnung in einer seitlichen Wand 134 realisiert ist, die sich zwischen dem Blech 84 und einer oberen Abdeckung 138 des Strohhäckslers 60 und der Wurfgebläse 100 befindet und rückwärtig des Strohhäckslers 60 endet. Sich auf der oberen Abdeckung 138 des Strohhäckslers 60 und der Wurfgebläse 100 ansammelnde Erntegutreste werden demnach pneumatisch abgefördert und nach hinten oder zur Seite hin abgegeben.

Ein weiterer Auslass 140 befindet sich oberhalb des Einzugsförderers 20 und ist durch eine nicht gezeigte Leitung mit einer der Leitungen 128, 132 oder einem weiteren Ausgang (nicht gezeigt) des Sauggebläses 126 verbunden. Der Auslass 142 dient dazu, Erntegutreste von der Oberseite des Gehäuses des Einzugsförderers 20 abzufördern.

Ein Auslass142 ist im Motorraum 78 angeordnet und über eine Leitung 144 mit der Leitung 128 verbunden. Der Auslass 142 dient dazu, Erntegutreste von der Oberseite des Einzugsgehäuses 20 abzufördern.

Weiterhin ist ein Einlass 146 des Gebläses 46 des Reinigungssystems 28 durch eine Leitung (nicht gezeigt) mit einer der Leitungen 128, 132 oder einem weiteren Ausgang (nicht gezeigt) des Sauggebläses 126 verbunden. Dadurch wird das Gebläse 46 mit unter Druck stehender Luft beaufschlagt, die die aufzubringende Antriebsleistung des Gebläses 46 vermindert.

## Patentansprüche

1. Emtemaschine (10) mit einem Verbrennungsmotor (112), einem mit dem Verbrennungsmotor (112) in fluidleitender Verbindung stehenden Wärmetauscher (114), einer Siebeinrichtung (116) zum Reinigen der Kühlluft für den Wärmetauscher (114) und einer der Siebeinrichtung (116) zugeordneten Absaugeinrichtung (112) zur Entfernung von Verunreinigungen von der Siebeinrichtung (116), wobei die Absaugeinrichtung (112) pneumatisch mit einem Eingang eines Sauggebläses (126) verbunden ist und ein Ausgang des Sauggebläses (126) mit einer Anordnung zum pneumatischen Abfördem von Verunreinigungen von wenigstens einem Bereich der Erntemaschine (10) verbunden ist, **dadurch gekennzeichnet, dass** der Ausgang des Sauggebläses (126) mit einer Leitung (132) verbunden ist, die einen auf den pneumatisch von Verunreinigungen zu befreienden Bereich der Emtemaschine (10) gerichteten Auslass (136) umfasst, und dass der Auslass (136) als Öffnung in einer seitlichen Wand (134) realisiert ist, die sich zwischen einem Blech (84), das sich schräg nach hinten und unten erstreckt und mit einer sich daran anschließenden Rutsche (86) verbunden ist, auf der Stroh in einem Schwadablagebetrieb nach unten auf den Feldboden gleiten kann, und einer oberen Abdeckung (138) eines Strohhäckslers (60) und von Wurfgebläsen (100) befindet und rückwärtig des Strohhäckslers (60) endet, sodass sich auf der oberen Abdeckung (138) ansammelnde Emtegutreste pneumatisch abgefördert und nach hinten oder zur Seite hin abgegeben werden.

## Claims

1. Harvester (10) having an internal combustion engine (112), a heat exchanger (114) connected in a fluid-conducting manner to the internal combustion engine (112), a screening device (116) for cleaning the cooling air for the heat exchanger (114) and a suction-extraction device (122), assigned to the screening device (116), for removing contaminants from the screening device (116), wherein the suction-extraction device (122) is connected pneumatically to an input of a suction fan (126) and an output of the suction fan (126) is connected to an arrangement for pneumatically discharging contaminants from at least one region of the harvester (10), **characterized in that** the output of the suction fan (126) is connected to a line (132) which comprises an outlet (136) directed at that region of the harvester (10) that is to be freed pneumatically of contaminants, and **in that** the outlet (136) is realized as an opening in a side wall (134) which is located between a metal sheet (84), which extends obliquely towards the rear and downwardly and is connected to an adjoining chute (86) on which straw can slide downwardly onto the ground in swath depositing operation, and an upper cover (138) of a straw chopper (60) and of ejector blowers (100), and ends to the rear of the straw chopper (60) such that crop residues accumulating on the upper cover (138) are discharged pneumatically and are deposited towards the rear or to the side.

## Revendications

1. Moissonneuse (10) comprenant un moteur à combustion interne (112), un échangeur de chaleur (114) en liaison fluidique avec le moteur à combustion interne (112), un dispositif de criblage (116) pour purifier l'air de refroidissement pour l'échangeur de chaleur (114) et un dispositif d'aspiration (122) connecté au dispositif de criblage (116) pour éliminer les impuretés du dispositif de criblage (116), le dispositif d'aspiration (122) étant connecté pneumatiquement à une entrée d'une soufflante d'aspiration (126) et une sortie de la soufflante d'aspiration (126) étant connectée à un agencement pour refouler pneumatiquement les impuretés d'au moins une région de la moissonneuse (10), **caractérisée en ce que** la sortie de la soufflante d'aspiration (126) est connectée à une conduite (132) qui comprend une sortie (136) orientée vers la région de la moissonneuse (10) à nettoyer pneumatiquement des impuretés, et **en ce que** la sortie (136) est réalisée sous forme d'ouverture dans une paroi latérale (134) qui se trouve entre une tôle (84) qui s'étend obliquement vers l'arrière et vers le bas et qui est connectée à une glissière (86) s'y raccordant, sur laquelle de la paille peut glisser vers le bas sur le sol dans le champ dans un mode de fonctionnement de dépose d'andain, et un recouvrement supérieur (138) d'un hache-paille (60) et de soufflantes d'éjection (100), et qui se termine à l'arrière du hache-paille (60), de sorte que les résidus de récolte s'accumulant sur le recouvrement supérieur (138) soient évacués pneumatiquement et soient déchargés vers l'arrière ou vers le côté.
